# EUROPEAN PATENT APPLICATION

(11) **EP 4 325 923 A1**
(43) Date of publication of application: **21.02.2024**
(21) Application number: 22788034.1
(22) Date of filing: 29.03.2022
(51) Int. Cl.: H04W 16/28, H04W 72/04

(54) **TERMINAL, WIRELESS COMMUNICATION METHOD, AND BASE STATION**

(30) Priority: 16.04.2021 JP 2021069906
(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2022/015531
(87) International publication number: WO 2022/220109

(57) **Abstract**

A terminal according to one aspect of the present disclosure includes a receiving section that receives first information indicating a plurality of transmission configuration indication (TCI) states, second information related to an association between a field to indicate a transmission configuration indication (TCI) state included in downlink control information (DCI) and one or more TCI states applied to signals of multiple types, and DCI indicating one or more TCI states out of the plurality of TCI states, and a control section that applies the one or more TCI states to the signals of multiple types on the basis of the first information, the second information, and the field to indicate the TCI state included in the DCI indicating the one or more TCI states. According to one aspect of the present disclosure, it is possible to appropriately perform TCI state indication.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), a user terminal (terminal, User Equipment (UE)) that controls transmission/reception processing on the basis of information related to quasi-co-location (QCL) (QCL assumption/Transmission Configuration Indication (TCI) state/spatial relation) is under study.

A case that configured/activated/indicated TCI states are applied to signals (channels/RSs) of multiple types is under study. However, there is a case where a TCI state indication method is indefinite. Unless the TCI state indication method is definite, communication quality reduction, throughput reduction, or the like may occur.

Thus, an object of the present disclosure is to provide a terminal, a radio communication method, and a base station that appropriately perform TCI state indication.

### Solution to Problem

A terminal according to one aspect of the present disclosure includes a receiving section that receives first information indicating a plurality of transmission configuration indication (TCI) states, second information related to an association between a field to indicate a transmission configuration indication (TCI) state included in downlink control information (DCI) and one or more TCI states applied to signals of multiple types, and DCI indicating one or more TCI states out of the plurality of TCI states, and a control section that applies the one or more TCI states to the signals of multiple types on the basis of the first information, the second information, and the field to indicate the TCI state included in the DCI indicating the one or more TCI states.

### Advantageous Effects of Invention

According to one aspect of the present disclosure, it is possible to appropriately perform TCI state indication.

### Brief Description of Drawings

FIG. 1 is a diagram to show an example of simultaneous beam update across a plurality of CCs;
FIGS. 2A and 2B are each a diagram to show an example of a common beam;
FIG. 3 is a diagram to show an example of TCI state configuration/indication by higher layer signaling according to a first embodiment;
FIG. 4 is a diagram to show another example of the TCI state configuration/indication by the higher layer signaling according to the first embodiment;
FIG. 5 is a diagram to show an example of a structure of an RRC information element related to TCI state configuration according to the first embodiment;
FIG. 6 is a diagram to show an example of a structure of a MAC CE related to TCI state configuration/indication according to the first embodiment;
FIG. 7 is a diagram to show an example of TCI state configuration/indication by higher layer signaling according to a second embodiment;
FIG. 8 is a diagram to show an example of a structure of an RRC information element related to TCI state configuration according to the second embodiment;
FIG. 9 is a diagram to show an example of a structure of a MAC CE related to TCI state configuration/indication according to the second embodiment;
FIG. 10 is a diagram to show an example of a structure of a MAC CE according to variations of the first embodiment and the second embodiment;
FIG. 11 is a diagram to show an example of a schematic structure of a radio communication system according to one embodiment;
FIG. 12 is a diagram to show an example of a structure of a base station according to one embodiment;
FIG. 13 is a diagram to show an example of a structure of a user terminal according to one embodiment; and
FIG. 14 is a diagram to show an example of a hardware structure of the base station and the user terminal according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) in a UE regarding at least one of a signal and a channel (which is referred to as a signal/channel) based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (indicated) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as QRS) .

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

The RS for QCL type X for the TCI state may mean the RS in the QCL type X relation with (the DMRS for) a certain channel/signal, and the RS may be referred to as a QCL source of the QCL type X for the TCI state.

For the PDCCH and the PDSCH, a QCL type A RS may always be configured, and a QCL type D RS may be additionally configured. It is difficult to estimate a Doppler shift, a delay, and the like by using one-shot reception of the DMRS, and thus the QCL type A RS is used for improvement in channel estimation accuracy. The QCL type D RS is used for receive beam determination in DMRS reception.

For example, TRSs 1-1, 1-2, 1-3, and 1-4 are transmitted, and TRS 1-1 is notified as a QCL type C/D RS by a TCI state for the PDSCH. The TCI state is notified, thereby allowing the UE to use, for reception/channel estimation of a DMRS for the PDSCH, information obtained from a result of previous periodic reception/measurement of TRS 1-1. In this case, a QCL source of the PDSCH is TRS 1-1, and a QCL target is the DMRS for the PDSCH.

### (Multiple TRPs)

For NR, one or a plurality of transmission/reception points (TRPs) (multiple TRPs (multi TRP (MTRP))) that perform DL transmission to a UE by using one or a plurality of panels (multiple panels) are under study. The UE that performs UL transmission to one or the plurality of TRPs by using one or a plurality of panels is under study.

Note that the plurality of TRPs may correspond to the same cell identifier (ID), or may correspond to different cell IDs. The cell ID may be a physical cell ID, or may be a virtual cell ID.

The multiple TRPs (for example, TRP #1 and TRP #2) may be connected to each other by an ideal/non-ideal backhaul, and information, data, and the like may be exchanged. From respective TRPs of the multiple TRPs, different codewords (Code Words (CWs)) and different layers may be transmitted. As a form of multi-TRP transmission, non-coherent joint transmission (NCJT) may be used.

In the NCJT, for example, TRP #1 performs modulation mapping for a first codeword to transmit a first number of layers (for example, 2 layers) by performing layer mapping and to transmit a first PDSCH by using first precoding. TRP #2 performs modulation mapping for a second codeword to transmit a second number of layers (for example, 2 layers) by performing layer mapping and to transmit a second PDSCH by using second precoding.

Note that a plurality of PDSCHs (multiple PDSCHs) subject to the NCJT may be defined as PDSCHs partially or fully overlapping with each other in relation to at least one of time and frequency domains. That is, a first PDSCH from a first TRP and a second PDSCH from a second TRP may overlap with each other in at least one of time and frequency resources.

It may be assumed that these first PDSCH and second PDSCH are not in a quasi-co-location (QCL) relationship (not quasi-co-located). Reception of the multiple PDSCHs may be interpreted as simultaneous reception of PDSCHs other than a certain QCL type (for example, QCL type D).

A plurality of PDSCHs (which may be referred to as multiple PDSCHs) from the multiple TRPs may be scheduled by using one piece of DCI (single DCI, single PDCCH) (single master mode, multiple TRPs based on single DCI (single-DCI based multi-TRP)). A respective plurality of PDSCHs from the multiple TRPs may be scheduled by using a plurality of pieces of DCI (multiple DCI, multi-PDCCH (multiple PDCCHs)) (multi-master mode, multiple TRPs based on multiple DCI (multi-DCI based multi-TRP)).

For URLLC for the multiple TRPs, support for repetition of a PDSCH (transport block (TB) or codeword (CW)) across the multiple TRPs is under study. Support for repetition schemes (URLLC schemes, for example, schemes 1, 2a, 2b, 3, and 4) across the multiple TRPs on a frequency domain, a layer (spatial) domain, or a time domain is under study. In scheme 1, multiple PDSCHs from the multiple TRPs are space division multiplexed (SDMed). In schemes 2a and 2b, PDSCHs from the multiple TRPs are frequency division multiplexed (FDMed). In scheme 2a, redundancy versions (RVs) for the multiple TRPs are the same. In scheme 2b, the RVs for the multiple TRPs may be the same, or may be different from each other. In schemes 3 and 4, multiple PDSCHs from the multiple TRPs are time division multiplexed (TDMed). In scheme 3, the multiple PDSCHs from the multiple TRPs are transmitted in one slot. In scheme 4, the multiple PDSCHs from the multiple TRPs are transmitted in different slots.

According to such a multi-TRP scenario, more flexible transmission control using a channel with satisfactory quality is possible.

In order to support intra-cell (having the same cell ID) and inter-cell (having different cell IDs) multi-TRP transmissions based on multiple PDCCHs, in RRC configuration information for linking a plurality of pairs of PDCCHs and PDSCHs having multiple TRPs, one control resource set (CORESET) in PDCCH configuration information (PDCCH-Config) may correspond to one TRP.

The UE may judge that the multiple TRPs are multiple TRPs based on multiple DCI when at least one of the following condition 1 and condition 2 is satisfied. In this case, the TRPs may be interpreted as CORESET pool indexes.

### [Condition 1]

One CORESET pool index is configured.

### [Condition 2]

Two different values (for example, 0 and 1) of CORESET pool indexes are configured.

The UE may judge that the multiple TRPs are multiple TRPs based on single DCI when the following condition is satisfied. In this case, two TRPs may be interpreted as two TCI states indicated by a MAC CE/DCI.

### [Condition]

In order to indicate one or two TCI states for one codepoint of a TCI field in DCI, a "MAC CE for enhanced TCI state activation/deactivation for UE-specific PDSCH (Enhanced TCI states Activation/Deactivation for UE-specific PDSCH MAC CE)" is used.

DCI for common beam indication may be a UE-specific DCI format (for example, DL DCI format (for example, 1_1 or 1_2) or UL DCI format (for example, 0_1 or 0_2)), or may be a UE-group common DCI format.

### (Simultaneous Beam Update in Plurality of CCs)

In Rel. 16, one MAC CE can update beam indices (TCI states) of a plurality of CCs.

The UE can be configured with up to two applicable CC lists (for example, applicable-CC-list) by RRC. When two applicable CC lists are configured, the two respective applicable CC lists may correspond to intra-band CA in FR1 and intra-band CA in FR2.

An activation MAC CE of a TCI state of a PDCCH activates a TCI state associated with the same CORESET ID in all of the BWPs/CCs in the applicable CC list.

An activation MAC CE of a TCI state of a PDSCH activates a TCI state in all of the BWPs/CCs in the applicable CC list.

An activation MAC CE of spatial relation of an A-SRS/SP-SRS activates spatial relation associated with the same SRS resource ID in all of the BWPs/CCs in the applicable CC list.

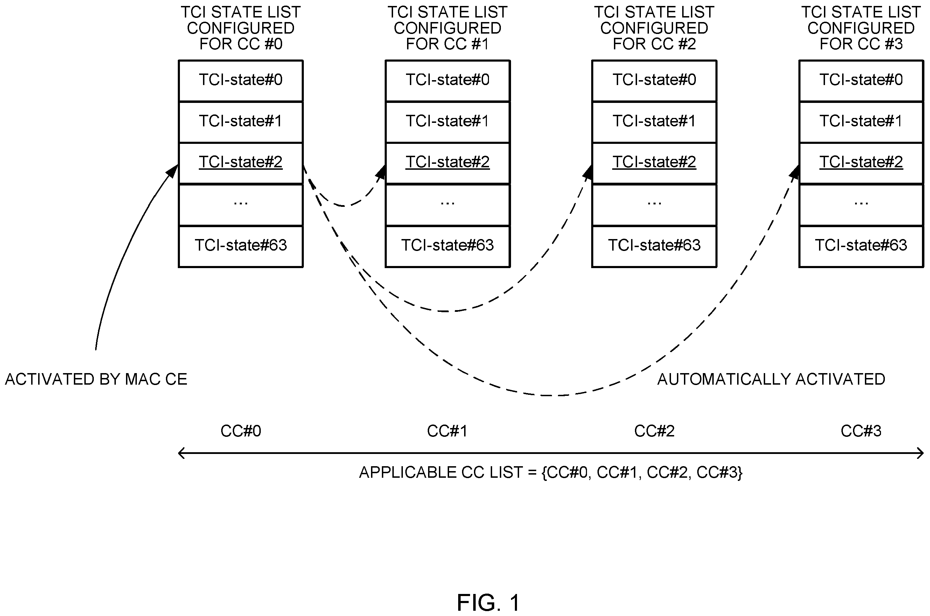

In the example of FIG. 1, the UE is configured with the applicable CC list indicating CCs #0, #1, #2, and #3 and a list indicating 64 TCI states for the CORESET or the PDSCH of each of the CCs. When one TCI state of CC #0 is activated by the MAC CE, corresponding TCI states are activated in CCs #1, #2, and #3.

A case that such simultaneous beam update is applicable only to a case of a single TRP is under study.

For the PDSCH, the UE may be based on the following procedure A.

### [Procedure A]

In one CC/DL BWP or in one set of CCs/BWPs, the UE receives an activation command for mapping up to 8 TCI states to codepoints of a DCI field (TCI field). When one set of TCI state IDs is activated for one set of CCs/DL BWPs, then an applicable CC list is determined by a CC indicated in the activation command, and the same set of TCI states is applied to all DL BWPs in the indicated CC. Only if a plurality of different values of CORESET pool indexes (CORESETPoolIndex) in a CORESET information element (ControlResourceSet) are not provided for the UE, and at least one TCI codepoint mapped to two TCI states is not provided for the UE, one set of TCI state IDs can be activated for one set of CCs/DL BWPs.

For the PDCCH, the UE may be based on the following procedure B.

### [Procedure B]

If up to two lists of cells for simultaneous TCI state activation by a simultaneous TCI update list (at least one of simultaneousTCI-UpdateList-r16 and simultaneousTCI-UpdateListSecond-r16) are provided for the UE by a simultaneous TCI cell list (simultaneousTCI-CellList), the UE applies, to CORESETs having index p in all configured DL BWPs of all configured cells in one list determined on the basis of a serving cell index provided by a MAC CE command, antenna port quasi co-location (QCL) provided by TCI states having the same activated TCI state ID value. Only if a plurality of different values of CORESET pool indexes (CORESETPoolIndex) in a CORESET information element (ControlResourceSet) are not provided for the UE, and at least one TCI codepoint mapped to two TCI states is not provided for the UE, the simultaneous TCI cell list can be provided for the simultaneous TCI state activation.

For a semi-persistent (SP)/aperiodic (AP)-SRS, the UE may be based on the following procedure C.

### [Procedure C]

When spatial relation information (spatialRelationInfo) for SP or AP-SRS resources configured by an SRS resource information element (higher layer parameter SRS-Resource) is activated/updated by a MAC CE for one set of CCs/BWPs, then an applicable CC list is indicated by a simultaneous spatial update list (higher layer parameter simultaneousSpatial-UpdateList-r16 or simultaneousSpatial-UpdateListSecond-r16), and in all BWPs in an indicated CC, the spatial relation information is applied to the SP or AP-SRS resources having the same SRS resource ID. Only if a plurality of different values of CORESET pool indexes (CORESETPoolIndex) in a CORESET information element (ControlResourceSet) are not provided for the UE, and at least one TCI codepoint mapped to two TCI states is not provided for the UE, spatial relation information (spatialRelationInfo) for SP or AP-SRS resources configured by an SRS resource information element (higher layer parameter SRS-Resource) is activated/updated by a MAC CE for one set of CCs/BWPs.

The simultaneous TCI cell list (simultaneousTCI-CellList) and simultaneous TCI update list (at least one of simultaneousTCI-UpdateList1-r16 and simultaneousTCI-UpdateList2-r16) are lists of serving cells in which TCI relations can be simultaneously updated by using the MAC CE. simultaneousTCI-UpdateList1-r16 and simultaneousTCI-UpdateList2-r16 do not include the same serving cell.

The simultaneous spatial update list (at least one of higher layer parameters simultaneousSpatial-UpdatedList1-r16 and simultaneousSpatial-UpdatedList2-r16) is a list of serving cells in which spatial relations can be simultaneously updated by using the MAC CE. simultaneousSpatial-UpdatedList1-r16 and simultaneousSpatial-UpdatedList2-r16 do not include the same serving cell.

Here, the simultaneous TCI update list and the simultaneous spatial update list are configured by the RRC, the CORESET pool indexes of the CORESET are configured by the RRC, and the TCI codepoint mapped to the TCI states is indicated by the MAC CE.

### (Unified/Common TCI Framework)

According to a unified TCI framework, UL and DL channels can be controlled by a common framework. Instead of defining a TCI state or a spatial relation for each channel in a manner similar to that of Rel. 15, the unified TCI framework may indicate a common beam (common TCI state) and apply the common beam to all UL and DL channels, or may apply a UL common beam to all UL channels and apply a DL common beam to all DL channels.

One common beam for both DL and UL or a DL common beam and a UL common beam (two common beams in total) are under study.

The UE may assume the same TCI state (joint TCI state, joint TCI pool, joint common TCI pool, joint TCI state set) for the UL and DL. The UE may assume different TCI states (separate TCI states, separate TCI pools, UL separate TCI pool and DL separate TCI pool, separate common TCI pools, UL common TCI pool and DL common TCI pool) for the respective UL and DL.

Default beams for the UL and DL may be unified by MAC CE-based beam management (MAC CE level beam indication). The default beams may be unified with a default UL beam (spatial relation) by updating a default TCI state for the PDSCH.

A common beam/unified TCI state from the same TCI pool for both of the UL and DL (joint common TCI pool, joint TCI pool, set) may be indicated by DCI-based beam management (DCI level beam indication). X (> 1) TCI states may be activated by the MAC CE. UL/DL DCI may select one TCI state from X active TCI states. The selected TCI state may be applied to channels/RSs for both of the UL and DL.

The TCI pool (set) may be a plurality of TCI states configured by an RRC parameter, or may be a plurality of TCI states (active TCI states, active TCI pools, sets) activated by the MAC CE, out of a plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥ 1) of TCI states (UL TCI states) applied to UL channels/RSs and the number M (≥ 1) of TCI states (DL TCI states) applied to DL channels/RSs may be defined. At least one of N and M may be notified/configured/indicated for the UE via higher layer signaling/physical layer signaling.

In the present disclosure, description "N = M = X (X is an arbitrary integer)" may mean that X TCI states (joint TCI states) (corresponding to X TRPs) common to the UL and DL are notified/configured/indicated for the UE. Description "N = X (X is an arbitrary integer), M = Y (Y is an arbitrary integer, Y may be equal to X)" may mean that respective X UL TCI states (corresponding to X TRPs) and Y DL TCI states (corresponding to Y TRPs) (that is, separate TCI states) are notified/configured/indicated for the UE.

For example, description "N = M = 1" may mean that one TCI state for a single TRP common to the UL and DL is notified/configured/indicated for the UE (joint TCI state for a single TRP).

For example, description "N = 1, M = 1" may mean that one UL TCI state and one DL TCI state for a single TRP are separately notified/configured/indicated for the UE (separate TCI state for a single TRP).

For example, description "N = M = 2" may mean that a plurality of (two) TCI states for a plurality of (two) TRPs common to the UL and DL are notified/configured/indicated for the UE (joint TCI states for multiple TRPs).

For example, description "N = 2, M = 2" may mean that a plurality of (two) UL TCI states and a plurality of (two) DL TCI state for a plurality of (two) TRPs are notified/configured/indicated for the UE (separate TCI states for multiple TRPs).

Note that in the above-described example, a case where values of N and M are 1 or 2 is described, but the values of N and M may be 3 or more, or N and M may be different from each other.

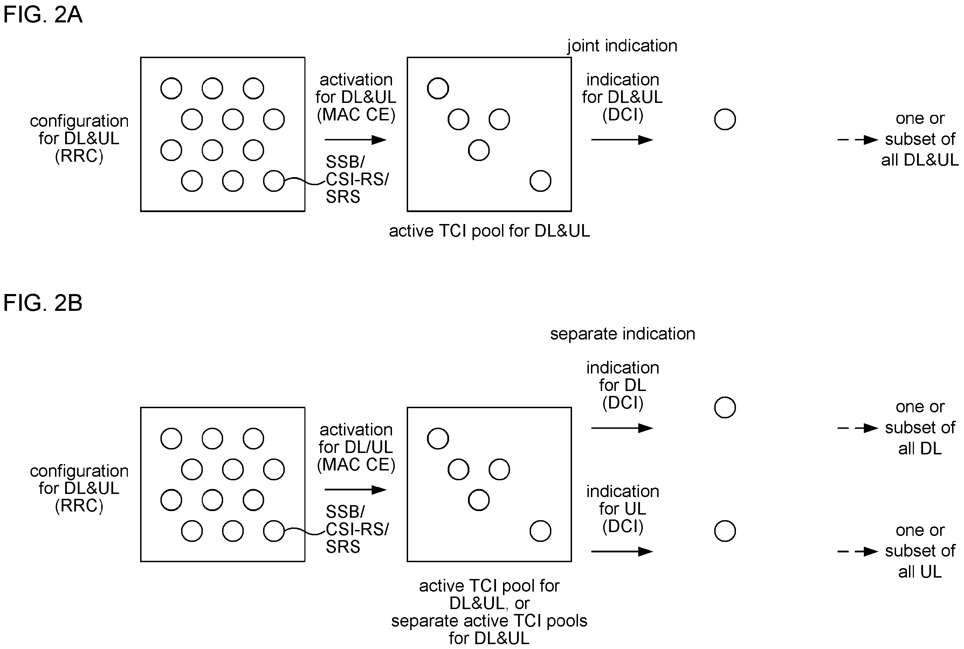

In an example of FIG. 2A, the RRC parameter (information element) configures a plurality of TCI states for both of the DL and UL. The MAC CE may activate a plurality of TCI states out of the plurality of configured TCI states. DCI may indicate one of the plurality of activated TCI states. The DCI may be UL/DL DCI. The indicated TCI state may be applied to at least one (or all) of UL/DL channels/RSs. One piece of DCI may indicate both a UL TCI and a DL TCI.

In the example of FIG. 2A, one dot may be one TCI state applied to both of the UL and DL, or may be two respective TCI states applied to the UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that in the present disclosure, a higher layer parameter (RRC parameter) to configure a plurality of TCI states may be referred to as configuration information to configure a plurality of TCI states, or may be simply referred to as "configuration information." In the present disclosure, a case that one of the plurality of TCI states is indicated by using the DCI may be reception of indication information to indicate one of a plurality of TCI states included in the DCI, or may simply be reception of "indication information."

In an example of FIG. 2B, the RRC parameter configures a plurality of TCI states (joint common TCI pool) for both of the DL and UL. The MAC CE may activate a plurality of TCI states (active TCI pool) out of the plurality of configured TCI states. An (separate) active TCI pool for each of the UL and DL may be configured/activated.

DL DCI or new DCI format may select (indicate) one or more (for example, one) TCI states. The selected TCI states may be applied to one or more (or all) DL channels/RSs. The DL channels may be PDCCHs/PDSCHs/CSI-RSs. The UE may determine a TCI state for each DL channel/RS by using TCI state operation (TCI framework) in Rel. 16. UL DCI or new DCI format may select (indicate) one or more (for example, one) TCI states. The selected TCI states may be applied to one or more (or all) UL channels/RSs. The UL channels may be PUSCHs/SRSs/PUCCHs. Thus, different pieces of DCI may separately indicate the UL TCI and the

### DL TCI.

Existing DCI format 1_1/1_2 may be used for indication of the common TCI state.

A common TCI framework may have separate TCI states for the DL and UL.

### (Analysis)

As mentioned above, in the unified TCI framework, the common/unified TCI state can be configured/indicated/updated by DCI.

For Rel. 17 (or later versions), a case that the DCI is at least one of a DCI format with DL assignment including an existing TCI field (defined in Rel. 15/16 (or earlier versions)) (which may be referred to as a TCI state field), a DCI format without DL assignment including the existing TCI field, a DCI format without DL assignment including a new TCI field (defined in Rel. 17 (or later versions)), and a new DCI format including the new TCI field is under study.

In the present disclosure, DCI (DCI format) not indicating scheduling of any of a PDSCH and a PUSCH, DCI (DCI format) not indicating scheduling of a PDSCH, DCI (DCI format) without DL assignment, a DCI format for DL assignment, the DCI format being DCI (DCI format) that does not schedule a PDSCH, a DCI format having a field for DL assignment, the DCI format being DCI (DCI format) that does not schedule a PDSCH, and DCI (DCI format) that includes a TCI field and that does not schedule a PDSCH may be interchangeably interpreted. The DCI format with/without DL assignment may be, for example, DCI format 1_1/1_2. The new DCI format may be represented by DCI format X_Y (X and Y are arbitrary numbers). The new TCI field may be a field for which an unused field out of fields used for existing PDSCH scheduling is reused, or may be a field not defined in Rel. 15/16.

For example, a case that indication/update of a TCI state for UL and DL (joint TCI state) and a DL TCI state is performed for the UE by using a TCI state field included in DCI format 1_1/1_2 with DL assignment is under study.

For example, a case that indication/update of at least one of a UL and DL common TCI state (joint TCI state) and a DL TCI state is performed for the UE by using a TCI state field included in DCI format 1 1/1 2 without DL assignment, and indication/update of at least one of a UL TCI state and a DL TCI state is performed for the UE by using a new field included in DCI format 1_1/1_2 without DL assignment is under study. A case that an unused field included in DCI format 1_1/1_2 without DL assignment is reused for the new field is under study.

However, in a case where a UL/DL TCI state is indicated by using DCI, as mentioned above, how to notify, to the UE, a TCI state corresponding to a codepoint indicated by a TCI state field included in the DCI has not been fully studied. Unless this study is fully studied, appropriate indication of the TCI state fails, and communication quality, throughput, and the like may deteriorate.

Thus, the inventors of the present invention came up with the idea of a method for configuring a TCI state when indicating a unified/common TCI.

Embodiments according to the present disclosure will be described in detail with reference to the drawings as follows. The radio communication methods according to respective embodiments may each be employed individually, or may be employed in combination.

In the present disclosure, "A/B/C" and "at least one of A, B, and C" may be interchangeably interpreted. In the present disclosure, a cell, a serving cell, a CC, a carrier, a BWP, a DL BWP, a UL BWP, an active DL BWP, an active UL BWP, and a band may be interchangeably interpreted. In the present disclosure, an index, an ID, an indicator, and a resource ID may be interchangeably interpreted. In the present disclosure, to support, to control, to be able to control, to operate, and to be able to operate may be interchangeably interpreted.

In the present disclosure, configure, activate, update, indicate, enable, specify, and select may be interchangeably interpreted.

In the present disclosure, the higher layer signaling may be, for example, any one of Radio Resource Control (RRC) signaling, Medium Access Control (MAC) signaling, broadcast information, and the like, or a combination of these. In the present disclosure, RRC, RRC signaling, an RRC parameter, a higher layer, a higher layer parameter, an RRC information element (IE), and an RRC message may be interchangeably interpreted.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, a MAC CE and an activation/deactivation command may be interchangeably interpreted.

In the present disclosure, a pool, a set, a group, a list, and a candidate may be interchangeably interpreted.

In the present disclosure, a DMRS, a DMRS port, and an antenna port may be interchangeably interpreted.

In the present disclosure, a special cell, an SpCell, a PCell, and a PSCell may be interchangeably interpreted.

In the present disclosure, a beam, a spatial domain filter, a spatial setting, a TCI state, a UL TCI state, a unified TCI state, a unified beam, a common TCI state, a common beam, TCI assumption, QCL assumption, a QCL parameter, a spatial domain reception filter, a UE spatial domain reception filter, a UE receive beam, a DL beam, a DL receive beam, DL precoding, a DL precoder, a DL-RS, an RS of QCL type D in a TCI state/QCL assumption, an RS of QCL type A in a TCI state/QCL assumption, a spatial relation, a spatial domain transmission filter, a UE spatial domain transmission filter, a UE transmit beam, a UL beam, a UL transmit beam, UL precoding, a UL precoder, and a PL-RS may be interchangeably interpreted. In the present disclosure, a QCL type X-RS, a DL-RS associated with QCL type X, a DL-RS having QCL type X, a source of a DL-RS, an SSB, a CSI-RS, and an SRS may be interchangeably interpreted.

In the present disclosure, a common beam, a common TCI, a common TCI state, a unified TCI, a unified TCI state, a TCI state applicable to DL and UL, a TCI state applied to a plurality of channels/RSs (of multiple types), a TCI state applicable to channels/RSs of multiple types, and a PL-RS may be interchangeably interpreted.

In the present disclosure, a plurality of TCI states configured by RRC, a plurality of TCI states activated by a MAC CE, a pool, a TCI state pool, an active TCI state pool, a common TCI state pool, a joint TCI state pool, a separate TCI state pool, a UL common TCI state pool, a DL common TCI state pool, a common TCI state pool configured/activated by RRC/MAC CE, and TCI state information may be interchangeably interpreted.

In the present disclosure, a panel, an Uplink (UL) transmission entity, a TRP, a spatial relation, a control resource set (COntrol REsource SET (CORESET)), a PDSCH, a codeword, a base station, an antenna port for a certain signal (for example, a demodulation reference signal (DMRS) port), an antenna port group for a certain signal (for example, a DMRS port group), a group for multiplexing (for example, a code division multiplexing (CDM) group, a reference signal group, or a CORESET group), a CORESET pool, a CORESET subset, a CW, a redundancy version (RV), and a layer (MIMO layer, transmission layer, spatial layer) may be interchangeably interpreted. A panel Identifier (ID) and a panel may be interchangeably interpreted. In the present disclosure, a TRP ID, a TRP-related ID, a CORESET pool index, a position of one TCI state out of two TCI states corresponding to one codepoint of a field in DCI (ordinal number, first TCI state or second TCI state), and a TRP may be interchangeably interpreted.

In the present disclosure, a TRP, a transmission point, a panel, a DMRS port group, a CORESET pool, and one of two TCI states associated with one codepoint of a TCI field may be interchangeably interpreted.

In the present disclosure, a single TRP, a single-TRP system, single-TRP transmission, and a single PDSCH may be interchangeably interpreted. In the present disclosure, multiple TRPs, a multi-TRP system, multi-TRP transmission, and multiple PDSCHs may be interchangeably interpreted. In the present disclosure, single DCI, a single PDCCH, multiple TRPs based on single DCI, and activation of two TCI states on at least one TCI codepoint may be interchangeably interpreted.

In the present disclosure, a single TRP, a channel using a single TRP, a channel using one TCI state/spatial relation, a case that multiple TRPs are not enabled by RRC/DCI, a case that a plurality of TCI states/spatial relations are not enabled by RRC/DCI, and a case that one CORESET pool index (CORESETPoolIndex) value is not configured for any CORESET, and any codepoint of a TCI field is not mapped to two TCI states may be interchangeably interpreted.

In the present disclosure, multiple TRPs, a channel using multiple TRPs, a channel using a plurality of TCI states/spatial relations, a case that multiple TRPs are enabled by RRC/DCI, a case that a plurality of TCI states/spatial relations are enabled by RRC/DCI, and at least one of multiple TRPs based on single DCI and multiple TRPs based on multiple DCI may be interchangeably interpreted. In the present disclosure, multiple TRPs based on multiple DCI and a case that one CORESET pool index (CORESETPoolIndex) value is configured for a CORESET may be interchangeably interpreted. In the present disclosure, multiple TRPs based on single DCI and a case that at least one codepoint of a TCI field is mapped to two TCI states may be interchangeably interpreted.

In the present disclosure, TRP #1 (first TRP) may correspond to CORESET pool index = 0, or may correspond to a first TCI state out of two TCI states corresponding to one codepoint of a TCI field. TRP #2 (second TRP) may correspond to CORESET pool index = 1, or may correspond to a second TCI state out of the two TCI states corresponding to one codepoint of the TCI field.

In the present disclosure, CORESET 0, a CORESET having index 0, and a common CORESET may be interchangeably interpreted.

### (Radio Communication Method)

In the present disclosure, a DL TCI, a DL-only TCI, a DL common TCI, a DL unified TCI, a common TCI, and a unified TCI may be interchangeably interpreted. In the present disclosure, a UL TCI, a UL-only TCI, a UL common TCI, a UL unified TCI, a common TCI, and a unified TCI may be interchangeably interpreted.

In the present disclosure, a case of a joint TCI pool and a case where the joint TCI pool has been configured may be interchangeably interpreted. In the present disclosure, a case of a separate TCI pool and a case where the separate TCI pool has been configured may be interchangeably interpreted.

In the present disclosure, the case where the joint TCI pool has been configured, a case where a TCI pool configured for DL and a TCI pool configured for UL are common, a case where a TCI pool for both of the DL and UL has been configured, and a case where one TCI pool (one set of TCIs) has been configured may be interchangeably interpreted.

In the present disclosure, the case where the separate TCI pool has been configured, a case where a TCI pool configured for DL and a TCI pool configured for UL are different from each other, a case where a DL TCI pool (first TCI pool, first TCI set) and a UL TCI pool (second TCI pool, second TCI set) have been configured, a case where a plurality of TCI pools (plurality of sets of TCIs) have been configured, and a case where the DL TCI pool has been configured may be interchangeably interpreted. When the DL TCI pool has been configured, the UL TCI pool may be equal to the configured TCI pool.

In the present disclosure, a channel/RS to which the common TCI is applied may be a PDSCH/HARQ-ACK information/PUCCH/PUSCH/CSI-RS/SRS.

In each embodiment of the present disclosure, a pool (list) including a plurality of unified TCI states may be configured/activated for a UE, and one or more TCI states out of the plurality of unified TCI states may be indicated. The configuration/activation may be performed by configuration information transmitted via higher layer signaling (for example, RRC signaling/MAC CE). The indication may be performed by indication information transmitted by using DCI.

Note that in the present disclosure, a signaling structure, signaling, configuration, a structure, configuration information, indication, and indication information may be interchangeably interpreted.

In the present disclosure, BFR, BFR configuration, BFR procedure, BFD, BFD procedure, a BFD-RS, BFD-RS configuration, RLM, RLM configuration, RLM procedure, an RLM-RS, and RLM-RS configuration may be interchangeably interpreted. In the present disclosure, per-cell BFR, cell-specific BFR, and BFR for Rel. 15/16 may be interchangeably interpreted. In the present disclosure, per-TRP BFR, TRP-specific BFR, and BFR for Rel. 17/Rel. 17 (or later versions) may be interchangeably interpreted.

### <First Embodiment>

At least one (or at least two) of a DL TCI state, a UL TCI state, and a UL and DL common TCI state may be indicated for a UE by using at least one of an existing DCI format (for example, DCI format 1_1/1_2 with DL assignment) and a new DCI format (for example, DCI format 1_1/1_2 without DL assignment).

At least one of the DL TCI state, the UL TCI state, and the UL and DL common TCI state may be indicated for the UE by using a common DCI field (for example, a TCI state (TCI) field).

At least one of a DL TCI state, a UL TCI state, and a UL and DL common TCI state indicated by a codepoint of a TCI field included in DCI may be configured/indicated for the UE by using higher layer signaling (RRC/MAC CE).

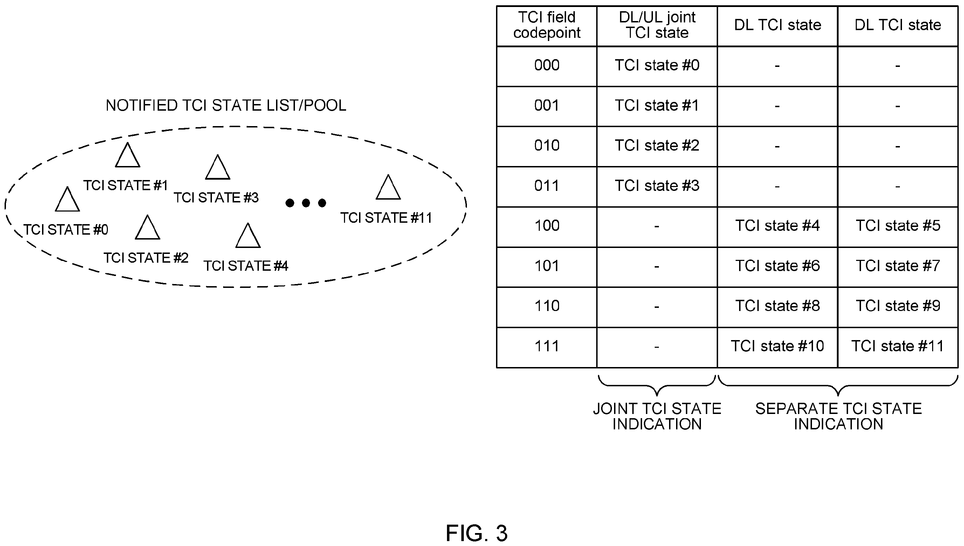

FIG. 3 is a diagram to show an example of the TCI state configuration/indication by the higher layer signaling according to a first embodiment. As shown in the example of FIG. 3, an association (for example, a table/list/pool) between codepoints indicated by the TCI field of the DCI and TCI states is configured/indicated for the UE by using the higher layer signaling (for example, RRC signaling/MAC CE). The UE may determine, on the basis of the association and a codepoint of the TCI state field included in the DCI, a TCI state applied to at least one of a DL signal/channel and a UL signal/channel.

As shown in the example of FIG. 3, a TCI state list/pool configured/notified by the higher layer signaling may be common to a joint TCI state and a separate TCI state. That is, the TCI state list/pool configured/notified by the higher layer signaling may include one or more TCI states for indication of the joint TCI state and one or more TCI states for indication of the separate TCI state. As shown in FIG. 3, TCI states for indication of the joint TCI state and TCI states for indication of the separate TCI state can be identified by different codepoints.

As shown in an example shown in the example of FIG. 3, respective TCI states for the joint TCI state and the separate TCI state may be different TCI states (TCI state IDs).

A TCI state corresponding to the joint TCI state (for example, TCI state #0/#1/#2/#3 of FIG. 3) may include information related to UL and DL (for example, a parameter related to transmit power control (TPC)). A DL TCI state for the separate TCI state (for example, TCI state #4/#6/#8/#10 of FIG. 3) may include only information related to the DL (for example, may not include the parameter related to the TPC).

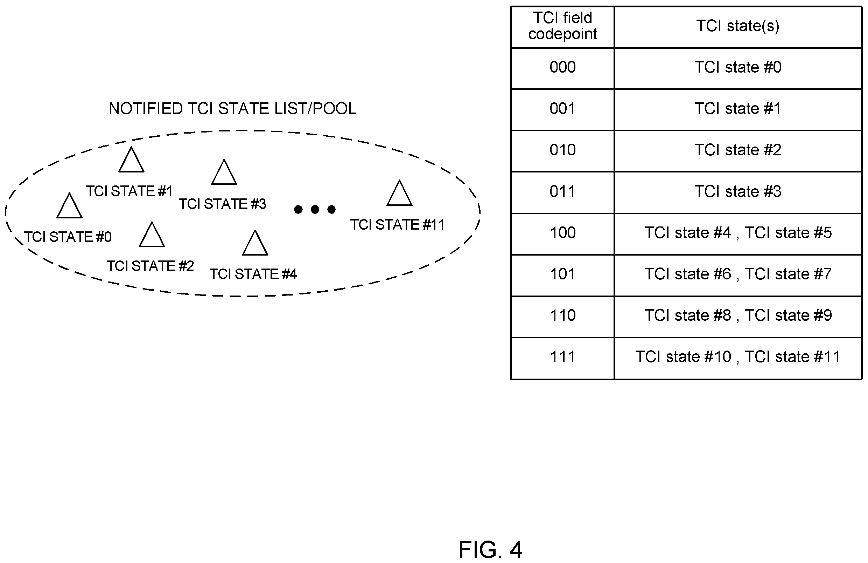

FIG. 4 is a diagram to show another example of the TCI state configuration/indication by the higher layer signaling according to the first embodiment. FIG. 4 differs from FIG. 3 mentioned above in that the joint TCI state and the separate TCI state are not distinguished from each other in the association between the codepoints of the TCI field and the TCI states.

For example, when one TCI state (TCI state #0/#1/#2/#3 of FIG. 4) is indicated, the UE may judge that the joint TCI state has been indicated. Also, when two TCI states are indicated, the UE may judge that the separate TCI state has been indicated. At this time, the UE may judge that a TCI state with a higher (or lower) TCI state ID is a DL TCI state, and may judge that a TCI state with a lower (or higher) TCI state ID is a UL TCI state.

Note that diagrams indicating the association between the codepoints of the TCI field and the TCI states in the present disclosure are just an example, and the numbers of bits of the codepoints of the TCI field, TCI state IDs/numbers, and the like are not limited to these.

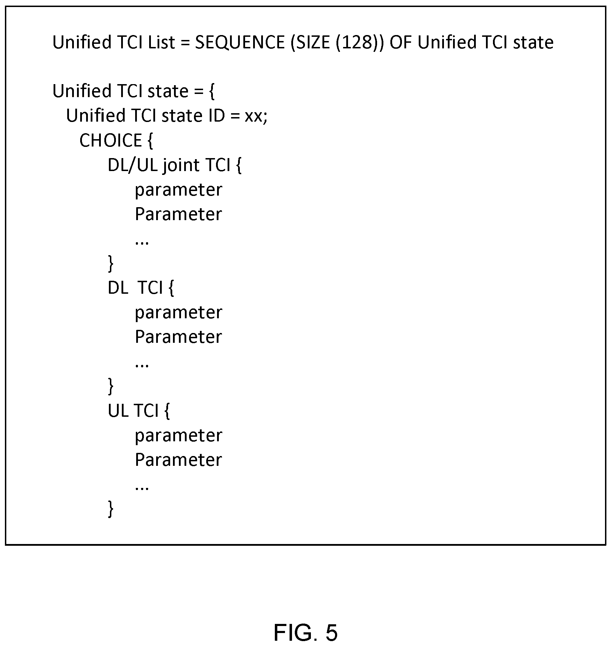

FIG. 5 is a diagram to show an example of a structure of an RRC information element related to TCI state configuration according to the first embodiment. In the first embodiment, the RRC information element for configuring a TCI state (unified/common TCI state) may have such a structure as shown in FIG. 5.

As shown in the example of FIG. 5, a unified/common TCI state list (Unified TCI List) may include up to 128 common/unified TCI states. Note that a maximum number of common/unified TCI states included in the unified/common TCI state list is not limited to 128, and may be an arbitrary number (for example, 64).

As shown in the example of FIG. 5, a parameter related to the unified/common TCI state (Unified TCI state) may include unified/common TCI state IDs (Unified TCI state IDs). The unified/common TCI state ID may be numbered in order starting from a DL and UL common TCI state (joint TCI state) to a DL TCI state to a UL TCI state. The unified/common TCI state ID may be numbered in order starting from the DL and UL common TCI state (joint TCI state) to the UL TCI state to the DL TCI state.

As shown in the example of FIG. 5, any one of a parameter for the DL and UL common TCI state (joint TCI state) (DL/UL joint TCI), a parameter for the DL TCI state (DL TCI), and a parameter for the UL TCI state (UL TCI) may be selectively (CHOICE) configured for a certain unified/common TCI state ID (Unified TCI state ID). The parameter for the DL and UL common TCI state (DL/UL joint TCI), the DL TCI state (DL TCI), and the UL TCI state (UL TCI) may include arbitrary parameters (simply described as "parameter" in FIG. 5).

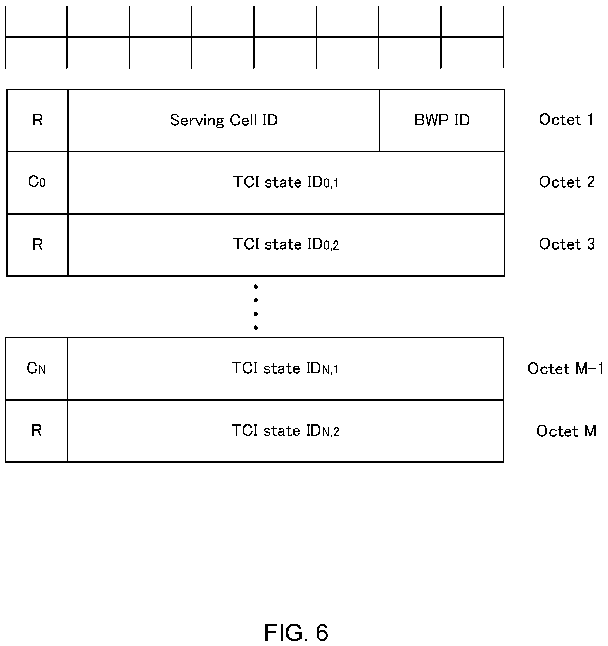

FIG. 6 is a diagram to show an example of a structure of a MAC CE related to TCI state configuration/indication according to the first embodiment. In the first embodiment, the MAC CE for configuring/indicating the TCI state (unified/common TCI state) may have such a structure as shown in FIG. 6. The association between the codepoints of the TCI field of the DCI and the TCI states may be performed by using such a MAC CE as shown in FIG. 6.

As shown in the example of FIG. 6, the MAC CE for configuring/indicating the TCI state (unified/common TCI state) may include at least one of a bit field indicating a serving cell ID (described as Serving Cell ID), a bit field indicating a BWP ID (described as BWP ID), a bit field indicating a TCI state ID (described as TCI state ID_{i,j} (i is an integer from 0 to N, j is 1 or 2)), a bit field indicating the number of TCI states (described as Cᵢ), and a reserved bit (described as R).

In the example of FIG. 6, the MAC CE for configuring/indicating the TCI state (unified/common TCI state) is constituted by M octets. "i" may correspond to an index of a codepoint of a TCI state field indicated by the DCI. "TCI state ID_{i,j}" may indicate the j-th TCI state for a codepoint of the i-th TCI state field. For example, in such an association as shown in FIG. 4 mentioned above, the first TCI state and the second TCI state corresponding to codepoint 100 are TCI state #4 and TCI state #5, respectively.

In the example of FIG. 6, a case that the bit field indicating the number of TCI states indicates a first value (for example, 0) may indicate that TCI states (in the same row) corresponding to the bit field are one TCI state (for example, a UL and DL common TCI state (joint TCI state)). Also, a case that the bit field indicating the number of TCI states indicates a second value (for example, 1) may indicate that TCI states (in the same row and a row right below the row) corresponding to the bit field are two TCI states (for example, a DL TCI state and a UL TCI state (separate TCI states)).

According to the above first embodiment, it is possible to appropriately configure/indicate an association between a codepoint of a TCI field and a TCI state by using higher layer signaling.

### <Second Embodiment>

A second embodiment differs from the first embodiment in that a TCI state list/pool configured/notified for a UE varies for a joint TCI state, a DL TCI state, and a UL TCI state.

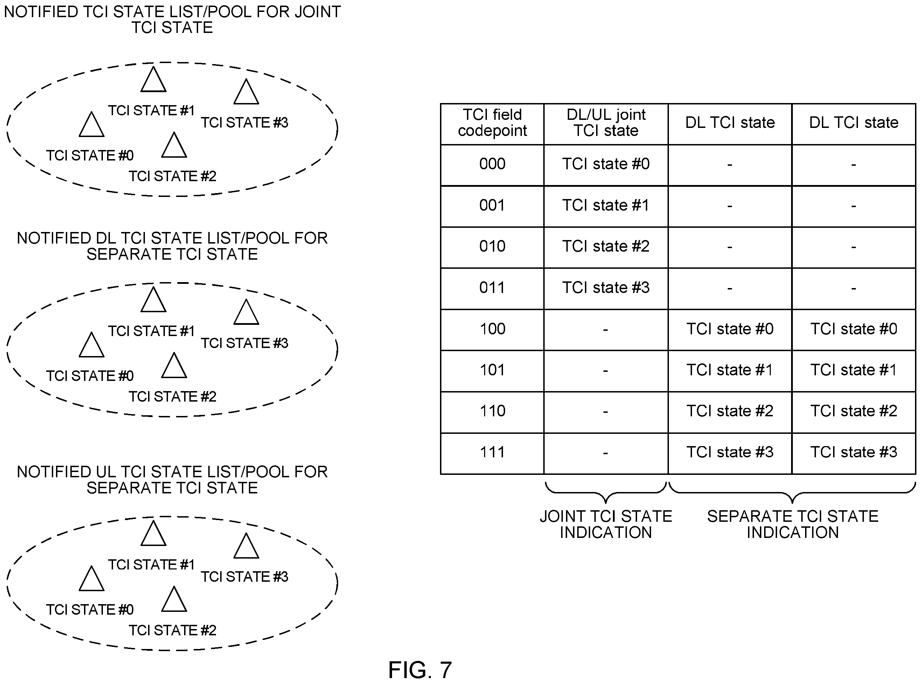

FIG. 7 is a diagram to show an example of TCI state configuration/indication by higher layer signaling according to the second embodiment. As shown in the example of FIG. 7, an association (for example, a table/list/pool) between codepoints indicated by a TCI field of DCI and TCI states is configured/indicated for the UE by using the higher layer signaling (for example, RRC signaling/MAC CE). The UE may determine, on the basis of the association and a codepoint of the TCI state field included in the DCI, a TCI state applied to at least one of a DL signal/channel and a UL signal/channel.

As shown in the example of FIG. 7, a TCI state list/pool may be configured for each of the joint TCI state, DL TCI state, and UL TCI state by using a higher layer. As shown in the example of FIG. 7, TCI state candidates for respective the joint TCI state and separate TCI state may include a common (same) TCI state ID. TCI states corresponding to the same TCI state ID in the joint TCI state, DL TCI state, and UL TCI state may be different TCI states.

In the example of FIG. 7, for example, when codepoint 000 is notified to the UE by using the TCI field included in the DCI, the UE selects a TCI state corresponding to TCI state #0 from a joint TCI state list/pool to apply the TCI state to UL transmission/DL reception. For example, when codepoint 100 is notified to the UE by using the TCI field included in the DCI, the UE selects a TCI state corresponding to TCI state #0 from a DL TCI state list/pool to apply the TCI state to DL reception, and selects a TCI state corresponding to TCI state #0 from a UL TCI state list/pool to apply the TCI state to UL transmission.

A TCI state corresponding to the joint TCI state may include information related to UL and DL (for example, a parameter related to transmit power control (TPC)). A DL TCI state for the separate TCI state may include only information related to the DL (for example, may not include the parameter related to the TPC).

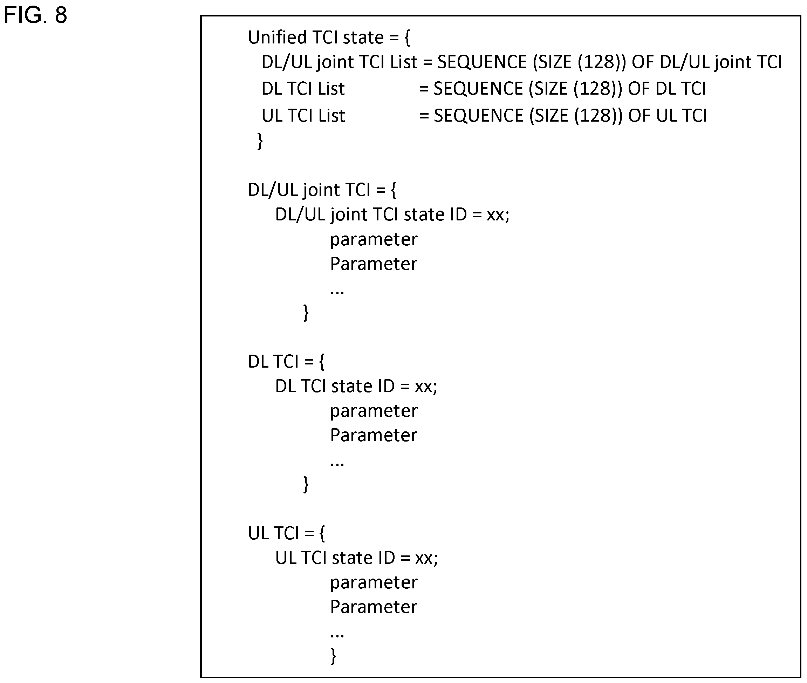

FIG. 8 is a diagram to show an example of a structure of an RRC information element related to TCI state configuration according to the second embodiment. In the second embodiment, the RRC information element for configuring a TCI state (unified/common TCI state) may have such a structure as shown in FIG. 8.

As shown in the example of FIG. 8, a parameter (Unified TCI state) related to the unified/common TCI state may include at least one of a parameter for a DL and UL common TCI state list (DL/UL joint TCI List), a parameter for a DL TCI state list (DL TCI List), and a parameter for a UL TCI state list (UL TCI List). The parameter for the DL and UL common TCI state list (DL/UL joint TCI List), the parameter for the DL TCI state list (DL TCI List), and the parameter for the UL TCI state list (UL TCI List) may each include parameters for up to 128 TCI states. Note that a maximum number of respective TCI states included in each TCI state list is not limited to 128, and may be an arbitrary number (for example, 64) .

As shown in the example of FIG. 8, the parameter for each TCI state (DL/UL joint TCI/DL TCI/UL TCI) may include a parameter indicating a TCI state ID (DL/UL joint TCI state ID/DL TCI state ID/UL TCI state ID) and an arbitrary parameter (simply described as "parameter" in FIG. 8).

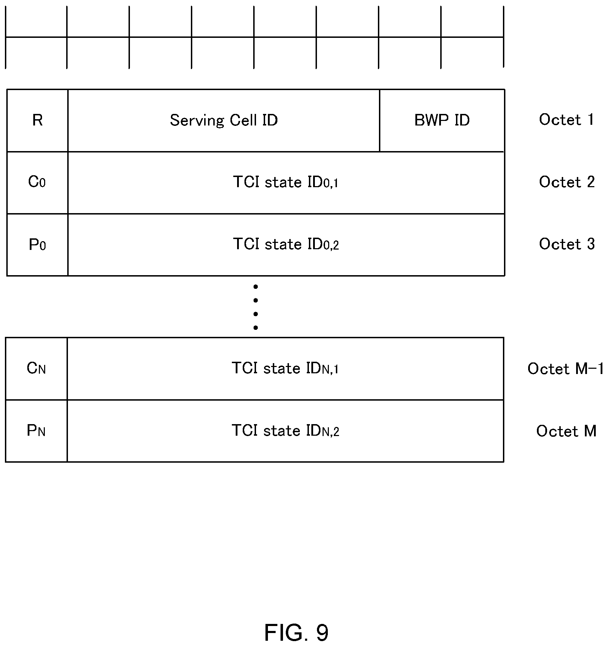

FIG. 9 is a diagram to show an example of a structure of a MAC CE related to TCI state configuration/indication according to the second embodiment. In the second embodiment, the MAC CE for configuring/indicating the TCI state (unified/common TCI state) may have such a structure as shown in FIG. 9. The association between the codepoints of the TCI field of the DCI and the TCI states may be performed by using such a MAC CE as shown in FIG. 9.

As shown in the example of FIG. 9, the MAC CE for configuring/indicating the TCI state (unified/common TCI state) may include at least one of a bit field indicating a serving cell ID (described as Serving Cell ID), a bit field indicating a BWP ID (described as BWP ID), a bit field indicating a TCI state ID (described as TCI state ID_{i,j} (i is an integer from 0 to N, j is 1 or 2)), a bit field indicating the number of TCI states (described as Cᵢ), a bit field for indicating a UL TCI state (described as Pᵢ), and a reserved bit (described as R).

In the example of FIG. 9, the MAC CE for configuring/indicating the TCI state (unified/common TCI state) is constituted by M octets. "i" may correspond to an index of a codepoint of a TCI state field indicated by the DCI. "TCI state ID_{i,j}" may indicate the j-th TCI state for a codepoint of the i-th TCI state field.

In the example of FIG. 9, a case that the bit field (Cᵢ) indicating the number of TCI states indicates a first value (for example, 0) may indicate that a corresponding TCI state is one TCI state (for example, a UL and DL common TCI state (joint TCI state)) .

A case that the bit field indicating the number of TCI states indicates a second value (for example, 1) may indicate that corresponding TCI states (in the same row) have TCI state IDs of the DL TCI state. This case may indicate that the bit field (Pᵢ) for indicating the UL TCI state is configured, and corresponding TCI states (in the same row) in the bit field have TCI state IDs of the UL TCI state.

With the MAC CE of the first embodiment, a total of X (in the above-mentioned example, 128) TCI state IDs are configurable in configuration of the DL and UL common TCI state, DL TCI state, and UL TCI state, whereas, in the second embodiment, X (that is, a total of 3X) TCI state IDs are configurable in configuration of each of the DL and UL common TCI state, DL TCI state, and UL TCI state. The second embodiment can configure more TCI state IDs than the first embodiment does, and has the same MAC CE signaling overhead as that of the first embodiment, and thus management of the MAC CE of the second embodiment is preferable. Note that as mentioned above, 128 described as the number (maximum number) of TCI state IDs is just an example, and the number is not limited to this.

According to the above second embodiment, it is possible to appropriately configure/indicate an association between a codepoint of a TCI field and a TCI state by using higher layer signaling.

### <Variations of First Embodiment and Second Embodiment>

At least one of the MAC CE related to configuration/indication of the common TCI state described in the first embodiment and the MAC CE related to configuration/indication of the common TCI state described in the second embodiment may be a MAC CE defined in Rel. 17 (or later versions), or may be a "MAC CE for enhanced TCI state activation/deactivation for UE-specific PDSCH (Enhanced TCI states Activation/Deactivation for UE-specific PDSCH MAC CE)" defined in Rel. 16.

In order for the UE to distinguish between the MAC CE for enhanced TCI state activation/deactivation for UE-specific PDSCH (which may be referred to as a first MAC CE) defined in Rel. 16 and the MAC CE related to configuration/indication of the common TCI state (which may be referred to as a second MAC CE), an ID for distinguishing the first MAC CE or the second MAC CE may be configured for a MAC PDU.

The UE may judge/distinguish, on the basis of a specific bit field included in a MAC CE, whether a notified MAC CE is the first MAC CE described in the first embodiment or the MAC CE described in the second embodiment. The UE may judge/distinguish, on the basis of a specific bit field included in a MAC CE, whether a notified MAC CE is the first MAC CE described in the first embodiment, the MAC CE described in the second embodiment, or the second MAC CE.

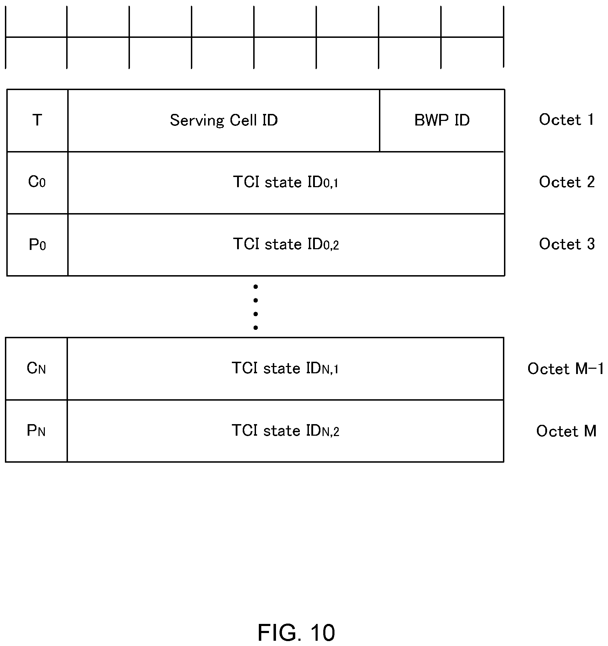

FIG. 10 is a diagram to show an example of a structure of the MAC CE according to variations of the first embodiment and the second embodiment. In the example shown in FIG. 10, the MAC CE includes a specific bit field (described as T) for judging use of the MAC CE. The UE judges/distinguishes, on the basis of a value of the specific bit field, whether the MAC CE is the first MAC CE described in the first embodiment or the MAC CE described in the second embodiment. The UE judges/distinguishes, on the basis of the specific bit field, whether the MAC CE is the first MAC CE described in the first embodiment, the MAC CE described in the second embodiment, or the second MAC CE.

Note that a position/size/name and the like of the specific bit field shown in FIG. 10 are just an example, and are not limited to this.

According to the above present embodiment, it is possible to appropriately distinguish between an existing MAC CE (defined in Rel. 16 (or earlier versions)) and a MAC CE for common TCI state configuration/indication defined in Rel. 17 (or later versions).

### <Third Embodiment>

A higher layer parameter (RRC IE)/UE capability corresponding to a function (characteristic, feature) in at least one of a plurality of embodiments described above may be defined. The UE capability may indicate that this function is supported.

A UE for which the higher layer parameter (for enabling the function) corresponding to the function has been configured may perform the function. A "case that a UE for which the higher layer parameter corresponding to the function has not been configured does not perform the function (for example, follows Rel. 15/16)" may be defined.

A UE that has reported the UE capability indicating that the function is supported may perform the function. A "case that a UE that has not reported the UE capability indicating that the function is supported does not perform the function (for example, follows Rel. 15/16)" may be defined.

When the UE has reported the UE capability indicating that the function is supported, and the higher layer parameter corresponding to the function has been configured for the UE, the UE may perform the function. A "case that when a UE does not report the UE capability indicating that the function is supported or when the higher layer parameter corresponding to the function is not configured for the UE, the UE does not perform the function (for example, follows Rel. 15/16)" may be defined.

The UE capability may indicate whether the UE supports this function.

The function may be a unified TCI state framework.

The UE capability may be defined by whether at least one of the unified TCI state framework, joint/separate TCI pool, and joint/separate beam indication is supported.

The UE capability may be defined by the number of TCI states configured by RRC for common beam indication supported by the UE. The common beam indication and each of UL separate beam indication and DL separate beam indication may be interchangeably interpreted. The common beam indication may be interpreted as at least one of common beam indication, UL separate beam indication, and DL separate beam indication.

The UE capability may be defined by the number of active TCI states for common beam indication supported by the UE. The common beam indication and each of UL separate beam indication and DL separate beam indication may be interchangeably interpreted. The common beam indication may be interpreted as at least one of common beam indication, UL separate beam indication, and DL separate beam indication.

The UE capability may be defined by at least one of N and M supported by the UE (the number N of TCI states (UL TCI states) applied to UL channels/RSs and the number M of TCI states (DL TCI states) applied to DL channels/RSs).

The UE capability may be defined by whether a TCI state is indicated by DCI. For example, the UE capability may be defined by whether a case that a common TCI state is indicated by at least one of a new DCI format or a DCI format without DL assignment (DCI format 1_1/1_2) is supported.

The UE capability may be defined by whether one of a joint TCI state or a separate TCI state can be indicated by one DCI codepoint. The DCI codepoint may be a codepoint of an existing TCI field included in the DCI, or a codepoint of a new field included in the DCI. The UE capability may be defined by whether dynamic switch/switching/update of joint TCI state indication and separate TCI state indication is supported.

The UE capability may be defined by whether the MAC CE described in the first/second embodiment is supported.

According to a third embodiment described above, the UE can achieve the above-described function while maintaining compatibility with existing specifications.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

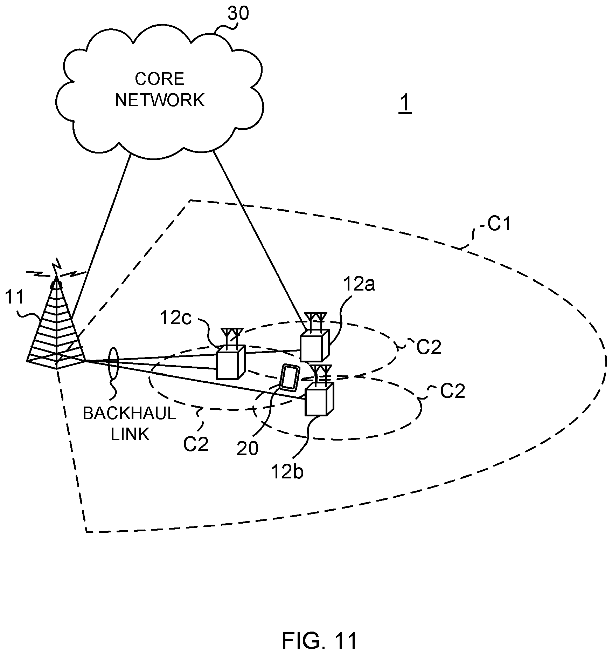

FIG. 11 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

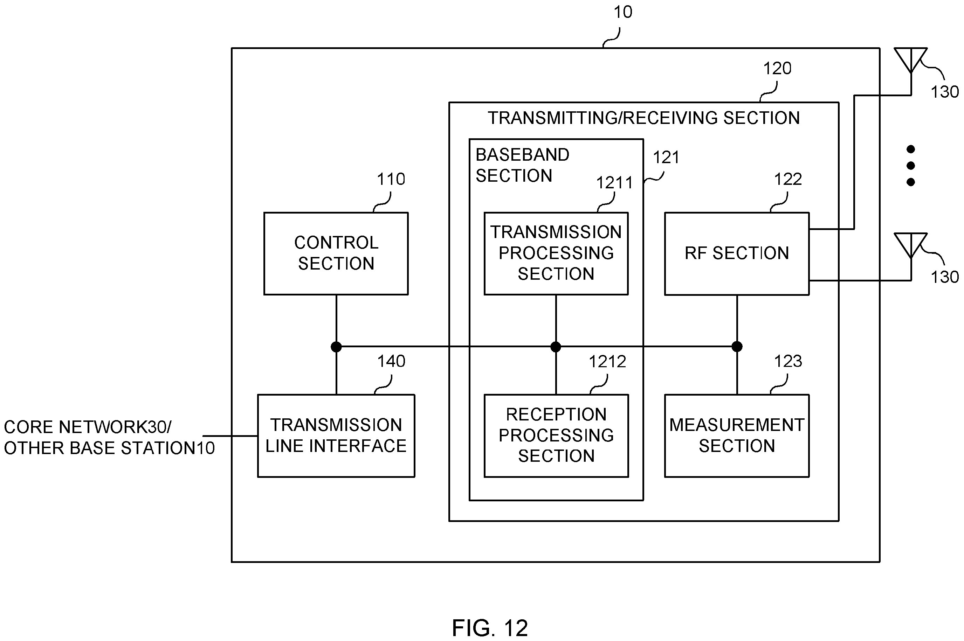

FIG. 12 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit first information indicating a plurality of transmission configuration indication (TCI) states, second information related to an association between a field to indicate a transmission configuration indication (TCI) state included in downlink control information (DCI) and one or more TCI states applied to signals of multiple types, and DCI indicating one or more TCI states out of the plurality of TCI states. The control section 110 may apply the one or more TCI states to the signals of multiple types on the basis of the first information, the second information, and the field to indicate the TCI state included in the DCI indicating the one or more TCI states (the first and second embodiments).

### (User Terminal)

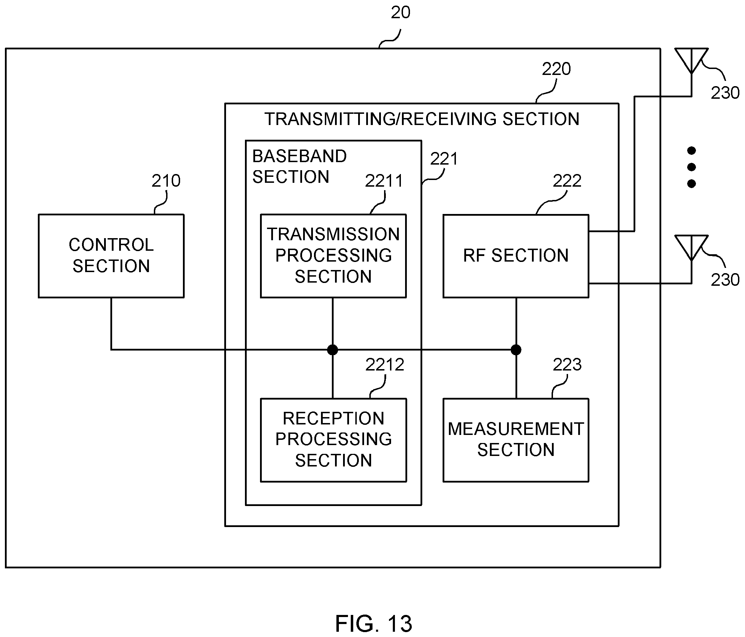

FIG. 13 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220, the transmitting/receiving antennas 230, and the communication path interface 240.

The transmitting/receiving section 220 may receive first information indicating a plurality of transmission configuration indication (TCI) states, second information related to an association between a field to indicate a transmission configuration indication (TCI) state included in downlink control information (DCI) and one or more TCI states applied to signals of multiple types, and DCI indicating one or more TCI states out of the plurality of TCI states. The control section 210 may apply the one or more TCI states to the signals of multiple types on the basis of the first information, the second information, and the field to indicate the TCI state included in the DCI indicating the one or more TCI states (the first and second embodiments).

The first information may be a list of a plurality of TCI states. The second information may be at least one of Radio Resource Control (RRC) signaling and a Medium Access Control (MAC) control element (the first and second embodiments).

The first information may be configured in common among indication of an uplink and downlink common TCI state, indication of a downlink-only TCI state, and indication of an uplink-only TCI state (the first embodiment). The first information may be separately configured for each of indication of an uplink and downlink common TCI state, indication of a downlink-only TCI state, and indication of an uplink-only TCI state (the second embodiment).

The DCI indicating the one or more TCI states may be DCI not indicating scheduling of any of a physical downlink shared channel and a physical uplink shared channel (the first and second embodiments).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

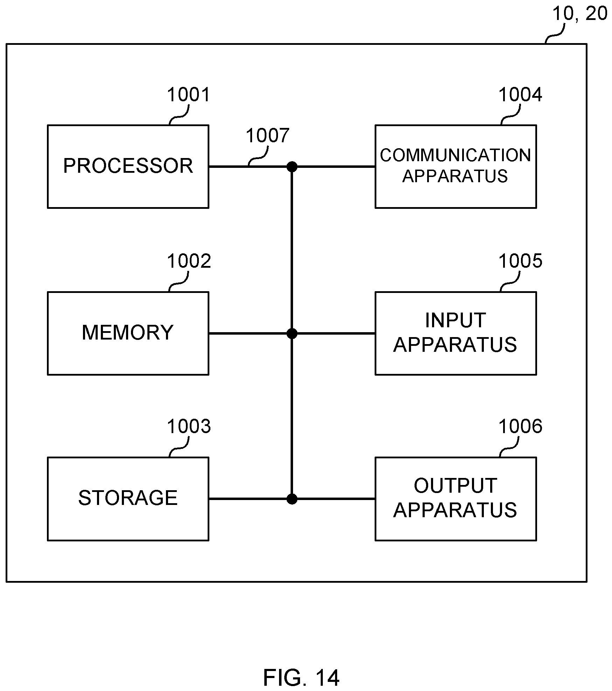

For example, a base station, a user terminal, and so on according to one embodiment of the present disclosure may function as a computer that executes the processes of the radio communication method of the present disclosure. FIG. 14 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink," "downlink," and the like may be interpreted as the words corresponding to the terminal-to-terminal communication (for example, "sidelink"). For example, an uplink channel, a downlink channel, and the like may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

This application is based on Japanese Patent Application No. 2021-069906 filed on April 16, 2021. The entire contents of the application are herein incorporated.

## Claims

1. A terminal comprising:
a receiving section that receives first information indicating a plurality of transmission configuration indication (TCI) states, second information related to an association between a field to indicate a transmission configuration indication (TCI) state included in downlink control information (DCI) and one or more TCI states applied to signals of multiple types, and DCI indicating one or more TCI states out of the plurality of TCI states; and
a control section that applies the one or more TCI states to the signals of multiple types on the basis of the first information, the second information, and the field to indicate the TCI state included in the DCI indicating the one or more TCI states.

2. The terminal according to claim 1, wherein
the first information is a list of a plurality of TCI states, and
the second information is at least one of Radio Resource Control (RRC) signaling and a Medium Access Control (MAC) control element.

3. The terminal according to claim 1, wherein
the first information is configured in common among indication of an uplink and downlink common TCI state, indication of a downlink-only TCI state, and indication of an uplink-only TCI state, or is separately configured for each of indication of an uplink and downlink common TCI state, indication of a downlink-only TCI state, and indication of an uplink-only TCI state.

4. The terminal according to claim 1, wherein
the DCI indicating the one or more TCI states is DCI not indicating scheduling of any of a physical downlink shared channel and a physical uplink shared channel.

5. A radio communication method for a terminal, the radio communication method comprising:
receiving first information indicating a plurality of transmission configuration indication (TCI) states, second information related to an association between a field to indicate a transmission configuration indication (TCI) state included in downlink control information (DCI) and one or more TCI states applied to signals of multiple types, and DCI indicating one or more TCI states out of the plurality of TCI states; and
applying the one or more TCI states to the signals of multiple types on the basis of the first information, the second information, and the field to indicate the TCI state included in the DCI indicating the one or more TCI states.

6. A base station comprising:
a transmitting section that transmits first information indicating a plurality of transmission configuration indication (TCI) states, second information related to an association between a field to indicate a transmission configuration indication (TCI) state included in downlink control information (DCI) and one or more TCI states applied to signals of multiple types, and DCI indicating one or more TCI states out of the plurality of TCI states; and
a control section that applies the one or more TCI states to the signals of multiple types on the basis of the first information, the second information, and the field to indicate the TCI state included in the DCI indicating the one or more TCI states.
